# FASCICULE DE BREVET EUROPEEN

(11) **EP 2 694 583 B1**
(45) Date de publication et mention de la délivrance du brevet: **24.12.2014**
(21) Numéro de dépôt: 12720251.3
(22) Date de dépôt: 05.04.2012
(51) Int. Cl.: C08L 33/06

(54) **NOUVEAU MATERIAU ACRYLIQUE RENFORCE AU CHOC**
NEUES SCHLAGVERSTÄRKTES ACRYLMATERIAL
NOVEL IMPACT-REINFORCED ACRYLIC MATERIAL

(30) Priorité: 07.04.2011 FR 1101046
(43) Date de publication de la demande: 12.02.2014
(73) Titulaire: Arkema France, 92700 Colombes (FR)
(72) Inventeur: BOUTILLIER, Jean-Marc, F-64230 Sauvagnon (FR); DISSON, Jean-Pierre, F-69390 Vernaison (FR)
(74) Mandataire: Albani, Dalila
(86) Numéro de dépôt international: PCT/FR2012/050745
(87) Numéro de publication internationale: WO 2012/136941

(56) Documents cités:
- WO-A2-01/12719
- US-A- 3 345 434

## Description

La présente invention a pour objet un matériau acrylique renforcé au choc, semi-rigide ou souple et de faible brillance. La faible brillance du matériau peut être obtenue en lui donnant un aspect de givré (« frosted » en anglais) texturé, satiné ou mat. Ce matériau comprend une matrice à base de copolymère à blocs acrylique nanostructuré dans laquelle sont dispersées des particules de copolymères acryliques hautement réticulés. Ces particules sont aussi parfois appelées perles lorsqu'elles sont fabriquées par un procédé de polymérisation en suspension. L'invention se rapporte également à l'utilisation dudit matériau pour la fabrication d'articles divers ayant un toucher doux (en anglais « soft touch ») et comme revêtement sur d'autres matériaux.

Jusqu'à présent, les matériaux acryliques d'aspect givré ou mat ont toujours été obtenus à partir de PMMA, lequel PMMA peut être légèrement modifié :
- soit par introduction de modifiants choc de structure coeur souple / écorce rigide (appelés « core-shell ») ;
- soit par incorporation de comonomères, comme par exemple des acrylates permettant d'améliorer la stabilité thermique, ou des acides acryliques ou méthacryliques permettant d'améliorer la résistance à la température.

Le document EP 1 022 115 décrit des articles polymériques extrudés ayant un aspect mat et une fmition texturée, comprenant une matrice à base de PMMA et des particules polymériques hautement réticulées à base de MMA.

Le document EP 2 089 473 décrit la préparation de compositions méthacryliques comprenant un homo- ou un copolymère de MMA dans lequel sont dispersées des particules de polymères thermoplastiques réticulés à base de MMA.

Ces matériaux sont fabriqués par la dispersion des perles acryliques réticulées dans une matrice de PMMA à l'état fondu (compoundage). Les matériaux obtenus diffusent la lumière tout en la laissant passer (par exemple les cabines de douches d'aspect « dépoli » (« frosted » en anglais)). Ils sont également très résistants au rayonnement UV. Cependant ces matériaux ont l'inconvénient d'être très rigides et d'avoir une mauvaise résistance au choc. Par ailleurs, la taille des perles acryliques réticulées influence directement la rugosité du produit final.

Le développement des matériaux acryliques dans le domaine des guides de lumière ou du revêtement d'autres matériaux est donc limité par la rigidité et la fragilité des matériaux actuels.

Il est donc souhaitable d'apporter des propriétés nouvelles aux matériaux acryliques à faible brillance, en améliorant leur résistance au choc ou en fabriquant même des matériaux acryliques « souples ». Ce type de matériau peut offrir de nouvelles applications par exemple dans le domaine du design (éclairages) et des revêtements de matériaux.

A cet effet la présente invention a pour objet, selon un premier aspect, un matériau acrylique semi-rigide ou souple comprenant :
- une matrice nanostructurée constituée d'au moins un copolymère à blocs acrylique thermoplastique,
- et au moins un copolymère acrylique hautement réticulé.

Cette combinaison a pour effet de conduire à un matériau qui présente un ensemble de propriétés nouvelles puisque le matériau est à la fois souple, très résistant au choc, non brillant, résistant aux rayonnements UV et dont la surface, de manière inattendue, une fois mise en oeuvre a un touché doux (« soft touch ») très agréable et plus ou moins prononcé selon le mélange réalisé entre un matériau mou (la matrice nanostructurée) et un autre très dur (le copolymère acrylique hautement réticulé).

Ces matériaux peuvent être transformés par moulage par injection, extrusion, co-extrusion, extrusion-soufflage pour la réalisation de pièces, profilés, plaques ou films par exemple.

On peut avantageusement utiliser le produit comme revêtement sur d'autres matériaux. Par exemple, on peut utiliser la technique de coextrusion ou lamination de film sur un substrat. On peut aussi réaliser des profilés utilisables par exemple dans des applications optiques.

On peut aussi fabriquer des structures multicouches comprenant une première couche constituée du matériau acrylique selon l'invention et une deuxième couche comprenant au moins un substrat en un matériau polymère thermoplastique.

L'invention sera maintenant décrite en détail.

Le développement de la polymérisation anionique et de la polymérisation radicalaire contrôlée ont permis vers le début des années 1990 la synthèse de copolymères à blocs acryliques, par exemple des diblocs de type polyméthacrylate de méthyle - polyacrylate de butyle (PMMA-pABu), polyméthacrylate de méthyle - polybutadiene, ou encore des triblocs de type polyméthacrylate de méthyle -polyacrylate de butyle - polyméthacrylate de méthyle, polystyrène - polybutadiène - polymethacrylate de méthyle.

En comparaison à des copolymères statistiques, les copolymères à blocs permettent d'obtenir des morphologies nouvelles, avec en particulier des organisations en domaines de quelques nanomètres des différentes phases constituées par chacun des blocs. Ces organisations sont par exemple décrites dans Macromolecules, Vol. 13, N°6, 1980, pp. 1602-1617, ou encore dans Macromolecules, vol. 39, N°17, 2006, pp. 5804-5814. Ce type d'organisation est appelé « nanostructuré ».

L'invention concerne, selon uri premier aspect, un matériau acrylique semi-rigide ou souple comprenant :
- une matrice nanostructurée comprenant au moins un copolymère à blocs acrylique thermoplastique,
- et au moins un copolymère acrylique hautement réticulé.

De façon inattendue, la combinaison entre un matériau mou et collant avec un copolymère acrylique réticulé et éventuellement une charge minérale confère au produit fini obtenu à partir de ce matériau un ensemble de propriétés unique, avec notamment une rugosité de surface particulière qui donne un effet « soft touch ». Comparés aux PMMA chocs «standards» connus de l'art antérieur, les produits selon l'invention présentent l'avantage également d'être très faciles à mettre en oeuvre grâce à leur fluidité élevée.

La matrice comprend au moins un copolymère à blocs acrylique thermoplastique. Selon un premier mode de réalisation, ladite matrice est constituée d'au moins un copolymère à blocs acrylique thermoplastique ayant une formule générale (A)ₙB dans laquelle :
- n est un nombre entier supérieur ou égal à 1,
- A est : un homo- ou copolymère acrylique ou méthacrylique ayant une Tg supérieure à 50°C, de préférence supérieure à 80°C, ou du polystyrène, ou un copolymère acrylique-styrène ou méthacrylique-styrène. Préférentiellement, A est du méthacrylate de méthyle, méthacrylate de phényle, méthacrylate de benzyle ou méthacrylate d'isobornyle. Préférentiellement, le bloc A est du PMMA ou du PMMA modifié avec des comonomères acryliques ou méthacryliques ;
- B est un homo- ou copolymère acrylique ou méthacrylique ayant une Tg inférieure à 20°C, préférentiellement composé d'acrylate de méthyle, acrylate d'éthyle, acrylate de butyle, acrylate d'éthylhexyl, méthacrylate de butyle, plus préférentiellement acrylate de butyle.

Par ailleurs les blocs A et/ou B peuvent contenir d'autres comonomères acryliques ou méthacryliques porteurs de fonctions chimiques diverses connues de l'homme de l'art, par exemple des fonctions acide, amide, aminé, hydroxy, époxy ou alcoxy. Le bloc A peut incorporer des groupes tels que l'acide acrylique ou l'acide méthacrylique afin d'en augmenter la tenue thermique.

De préférence, ladite matrice a une structure choisie parmi : ABA, AB, A₃B et A₄B.

Préférentiellement, le copolymère à blocs acrylique thermoplastique est choisi parmi les copolymères tribloc suivants : pMMA-pABu-pMMA, p(MMAcoAMA)-pABu-p(MMAcoAMA) et p(MMAcoAA)-pABu-p(MMAcoAA). Dans un mode de réalisation préféré, le copolymère à blocs est de type MAM (PMMA-pABu-PMMA).

Il est connu de l'homme de l'art que les polymères de type PMMA peuvent contenir de faibles quantités de comonomère acrylate pour en améliorer la stabilité thermique.

Le bloc B représente de 25 à 75% de la masse totale du copolymère à bloc, préférentiellement de 40 à 65%.

Le bloc B a une masse molaire en poids comprise entre 10 000 g/mol et 300 000 g/mol, préférentiellement 20 000 à 150 000 g/mol.

Selon un autre mode de réalisation, ladite matrice contient en plus du copolymère à blocs acrylique thermoplastique ayant une formule générale (A)ₙB décrit ci-dessus, au moins un autre polymère thermoplastique choisi parmi les PMMA, les ABS et les TPU. Une matrice particulièrement préférée est une combinaison de MAM et de PMMA, contenant en poids de 5% à 90% de PMMA, de préférence de 10 à 50% et avantageusement, de 10 à 30% de PMMA.

Les copolymères à blocs entrant dans la constitution de la matrice peuvent être obtenus par polymérisation radicalaire contrôlée (PRC) ou par polymérisation anionique, on choisira le procédé le plus adapté selon le type de copolymère à fabriquer. Préférentiellement ce sera la PRC, notamment en présence de nitroxydes, pour les copolymères à blocs de type (A)ₙB, et la polymérisation anionique ou radicalaire nitroxyde pour les structures type ABA comme le copolymère tribloc MAM.

Ladite matrice acrylique comprend en outre au moins un copolymère acrylique réticulé.

Les particules de copolymère acrylique hautement réticulées sont préparées par polymérisation en suspension, notamment par polymérisation radicalaire en suspension et présentent une forme sphérique ou sensiblement sphérique. Ce procédé de préparation permet de contrôler la taille des particules ainsi que leur forme et d'assurer une distribution étroite de leurs tailles.

Le copolymère acrylique hautement réticulé comprend comme seul monomère ou comme monomère majoritaire le MMA, c'est à dire qu'il comprend en poids plus de 50%, avantageusement plus de 65% de MMA. Ledit copolymère acrylique est donc soit un PMMA soit un copolymère du MMA et d'au moins un comonomère copolymérisable par voie radicalaire avec le MMA. Le comonomère peut être un vinylaromatique tel que le styrène ou l'alpha-méthylstyrène, et/ ou un monomère (méth)acrylique. Le taux de comonomère, lorsqu'il est présent, atteint 50% au plus du poids du copolymère acrylique.

La réticulation est obtenue en utilisant au moins un agent réticulant qui peut être par exemple un (méth)acrylate d'allyle, le divinylenzene, un di- ou tri-méthacrylate tel que le diméthacrylate de polyéthylèneglycol. Les particules de copolymère acrylique sont hautement réticulées de sorte à conserver leur intégrité lors du compoundage avec la matrice acrylique. Le terme « hautement réticulé » signifie ici que les particules de copolymère acrylique sont insolubles dans un solvant polaire tel que le tétrahydrofurane ou le chlorure de méthylène.

La teneur massique du copolymère acrylique en monomère réticulant est d'au moins 0,5%, de préférence supérieure à 0,8% et allant jusqu'à 2,5% du poids dudit copolymère.

Les particules de copolymère acrylique hautement réticulé ont une taille moyenne comprise entre 10 et 500 micromètres, de préférence entre 10 et 70 microns, mesurée selon la méthode ASTM D 1921. Ces particules peuvent être constituées soit de grains individualisés qui conserveront leur intégrité lors de la dispersion dans la matrice de copolymère acrylique à blocs, soit d'agglomérats de grains élémentaires qui seront divisés jusqu'à cette taille élémentaire lors de la mise en oeuvre. Cette taille élémentaire est par exemple identifiable par des techniques de microscopie sur les particules de départ ou sur le matériau final. La taille de ces grains élémentaires peut varier de 1 à 100 µm, préférentiellement de 3 à 50 µm.

Ledit au moins un copolymère acrylique hautement réticulé est constitué de particules de polymères comprenant en poids : 0-50% comonomère(s), 99,9-50% MMA et 0,1-2,5% agent de réticulation.

Le matériau acrylique selon l'invention comprend en poids de 60 à 99%, avantageusement de 70 à 97% et de préférence de 75 à 90% de matrice pour 40 à 1% avantageusement de 30 à 3% et de préférence de 10 à 25% de copolymère acrylique hautement réticulé.

Ce matériau est obtenu par la dispersion des perles acryliques hautement réticulées dans ladite matrice nanostructurée à l'état fondu (compoundage). Cette étape peut être réalisée par les techniques connues de l'homme de l'art pour fabriquer des compounds thermoplastiques, par exemple utilisation d'un mélangeur interne, extrusion monovis ou bivis, calandrage.

L'aspect faiblement brillant du matériau selon l'invention peut être caractérisé par la brillance de sa surface. Moins les rayons incidents sont réfléchis parallèlement entre eux, moins un matériau est brillant. Lorsque les rayons incidents sont réfléchis dans tous les sens, l'aspect de surface est mat, voire givré. Le matériau acrylique selon l'invention présente une brillance inférieure à 20, de préférence à 10, mesurée sous un angle de 60°.

Pour un procédé et conditions de mise en oeuvre donnés, et pour un mélange donné, l'aspect du matériau acrylique selon l'invention dépend de la taille et du type de particules ainsi que de la composition du copolymères à blocs.

Ainsi, concernant la souplesse, plus le copolymère acrylique sera riche en bloc B, ou plus un mélange PMMA / copolymère acrylique à blocs sera riche en copolymère acrylique à blocs, plus le matériau sera souple. Concernant la rugosité et donc l'aspect « toucher », plus les particules de copolymère acrylique hautement réticulé sont grosses, et/ou plus le copolymère à bloc est riche en homo- ou copolymère acrylique ou méthacrylique ayant une Tg inférieure à 20°C, plus le matériau selon l'invention présentera une rugosité de surface élevée.

Le matériau selon l'invention présente un aspect translucide et mat lorsque les grains élémentaires des particules de copolymère acrylique hautement réticulé ont des tailles allant de 1 à 40 µm, de préférence de 3 à 30 µm, et plus préférentiellement de préférence de 10 à 25 µm. Le matériau selon l'invention présente un aspect translucide et givré lorsque les particules de copolymère acrylique hautement réticulé ont des tailles allant de 40 à 70 µm, de préférence de 45 à 55 µm et les indices de réfraction des particules du copolymère acrylique et du copolymères à blocs diffèrent à 20°C de plus de 0,02 unités. Ces indices sont mesurés au moyen du test ISO 489.

Le matériau acrylique selon l'invention peut en outre comprendre une charge minérale choisie parmi la silice, le talc, le kaolin, le carbonate de calcium, le noir de carbone, les oxydes de titane, ainsi que les pigments utilisés pour colorer la matière. Les charges minérales provoquent néanmoins souvent une forte opacification donc l'utilisation de charges minérales sera évitée lorsqu'on on voudra conserver une certaine transparence (de contact) au matériau selon l'invention.

Les composants de base cités ci-dessus peuvent être complétés par d'autres additifs adaptés à la matrice PMMA nanostructurée concernée. Ces additifs peuvent être des antioxydants, des stabilisants thermiques, des stabilisants lumière, des plastifiants, des absorbeurs UV, des antistatiques, Il n'est pas exclu que l'additif soit un polymère comme par exemple le PVDF ou un copolymère à blocs polyéther-polyamide du type PEBAX. L'additif peut notamment être au moins un copolymère acrylique qui contient de 20 à 80% de MMA, 80 à 20% de BMA et de 0 à 15% d'AMA ou d'AA. Préférentiellement, ce copolymère acrylique est composé de 50 à 80% de MMA et de 50 à 20% de BMA. Ce copolymère acrylique a un poids moléculaire compris entre 40 000 et 300 000, et préférentiellement entre 40 000 et 100 000. Lorsque le copolymère acrylique est rajouté dans la composition, le matériau selon l'invention contient alors en poids, de 5 à 40% de copolymère acrylique, préférentiellement de 5 à 20%, pour 3 à 30%, préférentiellement de 10 à 25% de copolymère acrylique hautement réticulé, et pour 92 à 30%, préférentiellement 85 à 55% de matrice composée de copolymère à bloc acrylique nanostructuré. Le copolymère acrylique sera préférentiellement rajouté à la composition pour améliorer l'adhésion de la dite composition sur des substrats styréniques tels que PS cristal (polystyrène homopolymère) ou PS choc ou un mélange de ces 2 types de PS. Par PS choc, on entend un PS renforcé aux chocs par l'ajout de caoutchouc tel que le polybutadiène ou l'EPDM qui se retrouve dispersé dans la matrice PS sous forme de particules communément appelées nodules.

Avantageusement, le matériau acrylique selon l'invention présente un caractère semi-rigide, voire souple, tout en gardant une très bonne résistance au choc et aux rayonnements UV. Dans le cadre de la présente invention, un matériau semi-rigide se caractérise par module en flexion allant de 500 à moins de 1800 MPa, de préférence inférieur à 1500 MPa, alors qu'un matériau souple présente un module en flexion compris entre 10 à moins de 500 MPa, mesuré selon la norme ISO 178.

Le matériau acrylique selon l'invention se caractérise aussi par une résilience Charpy à éprouvette entaillée d'au moins 6 kJ/m², comme mesurée selon la norme EN ISO 179-1 à 23°C.

Ces matériaux peuvent être transformés par moulage par injection, extrusion, co-extrusion, extrusion-soufflage pour la réalisation de pièces, profilés, plaques, panneaux ou films par exemple.

On peut avantageusement utiliser le produit comme revêtement sur d'autres matériaux. Par exemple, on peut utiliser la technique de coextrusion ou lamination de film sur un substrat. On peut aussi réaliser des profilés utilisables par exemple dans des applications optiques.

On peut aussi fabriquer des structures multicouches comprenant une première couche constituée du matériau acrylique selon l'invention et une deuxième couche comprenant au moins un substrat en un matériau polymère thermoplastique. Dans ces structures, le matériau selon l'invention représente 1 à 20%, de préférence 2 à 15% de l'épaisseur totale.

Lorsque les matériaux selon l'invention sont coextrudés ou laminés sur un substrat, ce dernier peut être par exemple un polyester saturé tel que le polyéthylène téréphtalate PET ou PETg ou le polybutylène téréphtalate PBT, l'ABS (terpolymère acrylonitrile-butadiène-styrène), le SAN (copolymère styrène-acrylonitrile), l'ASA (copolymère acrylique-styrène-acrylonitrile), un polystyrène PS (cristal ou choc), les TPO (Thermoplastiques Polyoléfines), le polypropylène (PP), le polyéthylène (PE), le polycarbonate (PC), le polyphénylène oxyde PPO, une polysulphone, un polymère du chlorure de vinyle tel que le PVC, le PVC chloré (PVCC) ou le PVC expansé, le PU, les TPU, les polyacétals, le PMMA non choc ou choc. Il peut s'agir aussi d'un mélange de deux ou plusieurs polymères thermoplastiques de la liste précédente. Par exemple, il peut s'agir d'un mélange PPO/PS ou PC/ABS. Lorsque le substrat est un PS cristal ou choc, les matériaux selon l'invention peuvent avantageusement contenir comme additif de 5 à 40% de copolymère acrylique composé de 20 à 80% de MMA, 20 à 80% de BMA et de 0 à 15% d'AMA ou d'AA.

Une couche d'un autre polymère peut être présente entre le substrat et les produits selon l'invention pour améliorer l'adhésion, notamment dans le cas des substrats en PS cristal ou choc, TPO et PO.

L'invention va maintenant être illustrée par des exemples de réalisation non limitatifs de la portée de l'invention.

### Exemples de réalisation

Des systèmes à faible brillance ont été réalisés à partir des copolymères et des modes opératoires décrits ci-après.

### Exemple 1. Polymères et copolymères

**Tableau 1**

| Matrice | Structure | % de phase souple (Phase PABu) | Masse moléculaire en nombre du bloc PABu | Masse moléculaire en poids du bloc PABu | Module de flexion du polymère (ISO 527 1A) |
|---|---|---|---|---|---|
| Nanostrength M53 | PMMA-PABu-PMMA | 50 | 31000 | 55 000 | 270 |
| Nanostrength SM5590 | PMMA-PABu-PMMA | 55 | 63 000 | 112000 | 35 |

Les copolymères à bloc acryliques nanostructurés ont été obtenus par polymérisation radicalaire contrôlée en utilisant le Blocbuilder^{®} MA, alcoxyamine commercialisée par Arkema. Les copolymères présentent un indice de réfraction compris entre 1,48 et 1,485 selon la composition du copolymère.

Les perles de copolymère acrylique hautement réticulé utilisées sont des produits commercialisés par Altuglas International, sous la référence BS110 et BS130. La perle BS130 présente une taille moyenne de 20 µm, 90% des particules ont une taille inférieure à 30 µm, et présente un indice de réfraction de 1,49. La perle BS110 présente une taille moyenne comprise entre 35 et 60 µm, et présente un indice de réfraction de 1,52. Il s'agit de particules sous forme de monograins, et non pas d'agglomérats de grains plus fins.

### Exemple 2. Préparation de mélanges ou compounds contenant des copolymères acryliques à blocs et des perles de copolymère hautement réticulé

Les compositions à base de copolymères à bloc et perles réticulées ou charge minérale telles que décrites au tableau 2 ont été obtenues par introduction de granulés en proportion souhaitée dans une extrudeuse Werner 40. La température est de 200°C.

Dans ce tableau :
- les termes « PMMA-1 » et « PMMA-2 » correspondent à des PMMA commercialisés par Altuglas International, sous les références DRT et HFI-10, respectivement ;
- le paramètre "MFI" correspond à l'indice de fluage (ISO 1133) 230°C/3,8 kg, g/10mm ;
- résistance à la traction (ISO 527-2) 23°C (MPa);
- allongement à la rupture en traction (ISO 527-2) 23°C (%);
- module en flexion (ISO 178) 23°C (Mpa) ;
- résistance au choc Charpy entaillé (ISO 179-1eU) 23°C (kJ/m2);
- transmission de la lumière (ASTM D-1003) (%);
- trouble (ASTM-D1003) (%);
- température de ramollissement Vicat (VST-50) (ISO 306) 50 N (°C);
- température de ramollissement Vicat (VST-10) (ISO 306) 10 N (°C);
- température de déformation thermique HDT (ISO 75-2) 1,80MPa (°C);
- rugosité moyenne arithmétique, mesurée au moyen d'un profilomètre mécanique DEKTAK 8 de VEECO ;
- l'indice de réfraction : ISO 489 ;
- la brillance 60° : ASTM D523.

### Exemple 3. Préparation de films extrudés

Les granulés obtenus après compoundage sont introduits dans une extrudeuse de marque Andouart, de diamètre 40 mm. Les films d'épaisseur 300 µm environ sont extrudés à une température de 200 °C pour toutes les formulations à base de copolymères acryliques à bloc MAM, et à 230°C pour les autres.

### Exemple 4. Caractéristiques des granulés et des films extrudés

Les caractéristiques obtenues sont données dans le tableau 2 ci-dessous.

On peut noter que les produits des exemples 1a, 1b, 2a, 2b ont tous des souplesses beaucoup plus élevées que le PMMA modifié des contre exemples 1c et 2c (valeurs de modules plus faibles). Par ailleurs les MAM d'aspect faiblement brillant ont également une bien meilleure tenue au choc que le PMMA satiné ou mat.

L'effet de diffusion de la lumière est illustré par les valeurs de trouble élevées.

L'effet toucher doux ou « soft touch » est obtenu par l'association des modules plus faibles et de la rugosité conférée à la surface.

**Tableau 2**

| | Exemple 1A | Exemple 1B | Contre exemple 1 | Exemple 2A | Exemple 2B | Contre exemple 2 | Contre exemple 3 | Contre exemple 4 | contre exemple 5 | Contre exemple 6 |
|---|---|---|---|---|---|---|---|---|---|---|
| Composition | | | | | | | | | | |
| Nanostrength M53 | 82 | | | 85 | | | 100 | | | |
| Nanostrength SM5590 | | 82 | | | 85 | | | 100 | | |
| PMMA-1 | | | 82 | | | | | | 100 | |
| PMMA-2 | | | | | | 80 | | | | 100 |
| Altuglas BS110 | 18 | 18 | 18 | | | | | | | |
| Altuglas BS130 | | | | 15 | 15 | 20 | | | | |
| MFI | 5.7 | 2 | 0.7 | 4.2 | 2.2 | 1.7 | 7 | 1,6 | 0.8 | 3 |
| résistance à la tension | 9 | 5 | 38 | 10 | 2 | 50 | 7,3 | 5,7 | 38 | 38 |
| allongement à la rupture | 45 | 30 | 35 | 35 | 45 | 15 | 90 | 75 | 40 | 30 |
| module en flexion | 650 | 380 | 1900 | 1000 | 400 | 1900 | 270 | 32 | 1700 | 1700 |
| résistance au choc Charpy entaillé | 10.8 | 18.5 | 5.5 | 7 | 19 | 3.5 | 35 | Non cassé | 6.3 | 5 |
| transmission de la lumière | 74 | 74 | 88 | 60 | 75 | 90 | ** | ** | 90 | 90 |
| trouble (%) | 100 | 100 | 100 | 98 | 98 | | ** | ** | 2 | 2 |
| VST-50 | 38 | 28 | 101 | 40 | 28 | 93 | < 23 | < 23 | 100 | 90 |
| VST-10 | 79 | 72 | | 83 | 61 | | < 23 | < 23 | | |
| HDT (ISO 75-2) | | 48 | 88 | 63 | 44 | | | | 88 | 81 |
| rugosité de surface - 1 (nm) | 10462 | 11350 | 8543 | 5190 | 5756 | 4205 | 76 | 435 | 25 | 22 |
| rugosité de surface - 2 (nm) | 10382 | 11664 | 7906 | 5358 | 5276 | 4026 | 333 | 482 | 30 | 25 |
| Brillance 60° mesurée sur film extrudé (UB) | 4 | 5 | 5 | 7 | 7 | 7 | | | | |
| Toucher doux | OUI | OUI | NON | OUI | OUI | NON | NON | NON | NON | NON |

### Exemple 5 : Préparation de mélanges ou compounds et de films contenant des copolymères acryliques à blocs, des perles de copolymère hautement réticulé et un copolymère acrylique.

On introduit dans une extrudeuse Werner 40 chauffée à 200°C un mélange composé de 72% de Nanostrength M53, 18% de perles BS110 et 10% d'un copolymère contenant 60% de MMA et 40% de BMA. Les granulés obtenus sont ensuite introduits dans une extrudeuse de marque Andouart, de diamètre 40 mm. Le film d'épaisseur 300 gm environ est extrudé à une température de 200 °C.

### Exemple 6 : Essais d'adhésion de film extrudé sur un substrat de type PS

Dans une presse DARRAGON préchauffée à 200°C, on introduit dans un cadre de 3 mm d'épaisseur 85 g de granulés de PS choc référence 7240 commercialisé par la société Total Petrochemicals. Les granulés sont ensuite maintenus dans la presse sous une pression de 200 bars durant 2 minutes à 200°C afin de fabriquer une plaque de 3 mm d'épaisseur environ.

Dans une seconde étape, le film extrudé selon l'exemple 1A du tableau 2 (à savoir un film contenant des copolymères acryliques à blocs et des perles de copolymère hautement réticulé) est découpé aux dimensions correspondant au cadre de la presse, déposé sur la plaque de PS choc et la structure est maintenue dans la presse durant 2 minutes à 200°C sous une pression de 200 bars. Une fois la structure refroidie, on essaie de peler manuellement le film extrudé et on constate que celui-ci se décolle très facilement, signe d'une très mauvaise adhésion du film sur la plaque en PS.

On reproduit le même mode opératoire que précédemment mais en utilisant le film extrudé obtenu conformément à l'exemple 5 ci-dessus, à savoir un film contenant des copolymères acryliques à blocs, des perles de copolymère hautement réticulé et un copolymère acrylique. On essaie de peler manuellement le film extrudé et on constate qu'il est impossible de le décoller, signe d'une très bonne adhésion entre le film et la plaque en PS.

### ABREVIATIONS :

Tg - température de transition vitreuse d'un polymère mesurée par DSC selon la norme ASTM E1356
DSC - calorimétrie à balayage différentiel
PMMA ou pMMA- polyméthacrylate de méthyle
MMA - méthacrylate de méthyle
PABu ou pABu - polyacrylate de butyle
MAM - copolymère tribloc pMMA-pABu-pMMA
AMA - acide méthacrylique
AA - acide acrylique
BMA - Butyl Méthacrylate
EPDM - Ethylène Propylène Diène Monomère
ABS - terpolymère acrylonitryle-butadiène-styrène
TPU - polyuréthane thermoplastique
PU - polyuréthane
PS - polystyrène
PVC - polychlorure de vinyle
TPO - thermoplastiques polyoléfines
PO - polyoléfines
PE - polyéthylène
PP - polypropylène
PC - polycarbonate
MFI - indice de fluage (Melt Flow Index)
VST - température de ramollissement Vicat
HDT - température de déformation thermique
UB - unités de brillance
PVDF - polyfluorure de vinylidène
PET - polyéthylène téréphtalate
PETg - polyéthylène téréphtalate glycolisé
PBT - polybutylène téréphtalate
SAN - copolymère styrène-acrylonitrile
ASA - copolymère à blocs acrylique-styrène-acrylonitrile
PPO - poly(2,6-diméthylephénylène oxyde)
PVCC - PVC surchloré

## Revendications

1. Matériau acrylique comprenant :
• une matrice constituée d'au moins un copolymère à blocs acrylique thermoplastique,
• et au moins un copolymère acrylique hautement réticulé.

2. Matériau selon la revendication 1 comprenant en outre une charge minérale choisie parmi la silice, le talc, le kaolin, le carbonate de calcium, le noir de carbone, les oxydes de titane et les pigments.

3. Matériau selon l'une des revendications 1 et 2 comprenant en poids de 60 à 99%, avantageusement de 70 à 97% et de préférence du 75 à 90% de matrice pour 40 à 1%, avantageusement de 30 à 3% et de préférence de 25 à 10% de copolymère hautement réticulé.

4. Matériau selon l'une quelconque des revendications 1 à 3 dans lequel la matrice est constituée d'au moins un copolymère à blocs acrylique thermoplastique ayant une formule générale (A)ₙB dans laquelle :
• n est un nombre entier supérieur ou égal à 1,
• A est : un homo- ou copolymère acrylique ou méthacrylique ayant une Tg supérieure à 50°C, de préférence supérieure à 80°C, ou du polystyrène, ou un copolymère acrylique-styrène ou méthacrylique-styrène.
• B est un homo- ou copolymère acrylique ou méthacrylique ayant une Tg inférieure à 20°C, préférentiellement composé d'acrylate de méthyle, acrylate d'éthyle, acrylate de butyle, acrylate d'éthylhexyl, méthacrylate de butyle, plus préférentiellement acrylate de butyle.

5. Matériau selon la revendication 4 dans lequel le bloc A est du méthacrylate de méthyle, méthacrylate de phényle, méthacrylate de benzyle ou méthacrylate d'isobornyle.

6. Matériau selon l'une des revendications 4 ou 5 dans lequel le bloc A est du PMMA ou du PMMA modifié avec des comonomères acryliques ou méthacryliques.

7. Matériau selon l'une des revendications 1 à 6 dans lequel ladite matrice contient en plus du copolymère à blocs acrylique thermoplastique au moins un autre polymère thermoplastique choisi parmi les PMMA, les ABS et les TPU.

8. Matériau selon l'une des revendications 4 à 7 dans lequel le copolymère à bloc acrylique thermoplastique est choisi parmi les copolymères tribloc suivants : pMMA-pABu-pMMA, p(MMAcoAMA)-pABu-p(MMAcoAMA) et p(MMAcoAA)-pABu-p(MMAcoAA).

9. Matériau selon l'une quelconque des revendications 1 à 8 comprenant en outre au moins un additif polymère acrylique composé de 20 à 80%, préférentiellement de 50 à 80% de MMA, de 20 à 80%, préférentiellement de 50 à 20% de BMA et de 0 à 15% d'AMA ou AA et ayant une masse moléculaire moyenne en poids compris entre 40000 et 100 000 g/mol.

10. Matériau selon la revendication 9 composé, en poids, de 5 à 40%, préférentiellement de 5 à 20%, de copolymère acrylique, pour 3 à 30%, préférentiellement de 10 à 25% de copolymère acrylique hautement réticulé, et pour 92 à 30%, préférentiellement 85 à 55% de matrice nanostructurée.

11. Matériau selon l'une quelconque des revendications 1 à 10 dans lequel ledit au moins un copolymère acrylique hautement réticulé est constitué de particules de polymères ayant une taille moyenne comprise entre 10 et 70 microns et comprenant en poids : 99,9%-50% MMA, 0-50% comonomère copolymérisable par voie radicalaire avec le MMA et 0,1-2,5% agent de réticulation.

12. Matériau selon la revendication 11 présentant une brillance inférieure à 20, de préférence à 10, mesurée sous un angle de 60°.

13. Matériau selon l'une des revendications 11 ou 12 présentant un module en flexion allant de 500 à moins de 1800 MPa, de préférence inférieur à 1500 MPa, et une résilience Charpy à éprouvette entaillée d'au moins 6 kJ/m2, comme mesurée selon la norme EN ISO 179-1 à 23°C.

14. Matériau selon l'une des revendications 11 à 13 présentant un aspect translucide et givré lorsque les particules de copolymère acrylique hautement réticulé ont des tailles moyennes allant de 40 à 70 microns, de préférence de 45 à 55 microns et les indices de réfraction des particules du copolymère acrylique et du copolymères à blocs diffèrent à 20°C de plus de 0,02 unités.

15. Matériau selon l'une des revendications 11 à 13 présentant un aspect translucide et mat lorsque les grains élémentaires des particules de copolymère acrylique hautement réticulé ont des tailles allant de 1 à 40 µm, de préférence de 3 à 30 µm, et plus préférentiellement de préférence de 10 à 25 µm.

16. Article comprenant un matériau acrylique selon l'une des revendications 1 à 15, ledit article étant sous forme de film, pièce, profilé, plaque ou panneau.

17. Procédé de fabrication d'un article selon la revendication 16 comprenant une opération choisie parmi : moulage par injection, extrusion, co-extrusion ou extrusion-soufflage.

18. Utilisation d'un matériau acrylique selon l'une des revendications 1 à 15 comme revêtement de substrat, comprenant une étape de coextrusion dudit matériau avec un substrat ou une étape de lamination d'un film constitué dudit matériau sur un substrat.

19. Utilisation selon la revendication 18 dans laquelle ledit substrat comprend au moins un polymère thermoplastique choisi parmi : le PMMA non choc ou choc, les polyesters saturés tels que le PET, PETg ou le PET, l'ABS, le SAN, l'ASA, le PS cristal ou choc, les PO telles que le polypropylène ou le polyéthylène, le polycarbonate, le PPO, les TPO, les polysulphones, les polymères à base de chlorure de vinyle tel que le PVC, le PVCC ou le PVC expansé, le PU, les TPU, les polyacétals.

20. Utilisation selon l'une des revendications 18 et 19 dans laquelle une couche intermédiaire est disposée entre le matériau acrylique et ledit substrat, notamment dans le cas des substrats en PS choc, TPO et PO.

21. Structure multicouche comprenant une première couche consistant en le matériau selon l'une des revendications 1 à 15 et une deuxième couche comprenant au moins un substrat en un matériau polymère thermoplastique.

22. Structure multicouche selon la revendication 21 dans laquelle le matériau selon l'invention représente 1 à 20%, de préférence 2 à 15% de l'épaisseur totale.

23. Structure multicouche selon la revendication 21 ou 22 dans laquelle ledit substrat comprend au moins un polymère thermoplastique choisi parmi : le PMMA non choc ou choc, les polyesters saturés tels que le PET, PETg ou le PBT, l'ABS, le SAN, l'ASA, le PS cristal ou choc, le polypropylène, le polyéthylène, le polycarbonate, le PPO, les TPO, les polysulphones, les polymères à base de chlorure de vinyle tel que le PVC, le PVCC ou le PVC expansé, le PU, les TPU, les polyacétals.

## Patentansprüche

1. Acrylmaterial, das aufweist:
• eine Matrix, die aus mindestens einem thermoplastischen Acrylblockcopolymer besteht, und
• mindestens ein hochvernetztes Acrylcopolymer.

2. Material nach Anspruch 1, das ferner einen anorganischen Füllstoff enthält, der unter Kieselsäure, Talk, Kaolin, Calciumcarbonat, Ruß, Titanoxiden und Pigmenten ausgewählt ist.

3. Material nach einem der Ansprüche 1 und 2, das 60 bis 99 Gew.-%, vorteilhaft 70 bis 97 Gew.-% und vorzugsweise 75 bis 90 Gew.-% Matrix auf 40 bis 1 Gew.-%, vorteilhaft 30 bis 3 Gew.-% und vorzugsweise 25 bis 10 Gew.-% hochvernetztes Copolymer enthält.

4. Material nach einem der Ansprüche 1 bis 3, bei dem die Matrix aus mindestens einem thermoplastischen Acrylblockcopolymer besteht, das die allgemeine Formel (A)ₙB aufweist, worin:
• n eine ganze Zahl größer oder gleich 1 ist;
• A bedeutet: ein Acrylhomopolymer, Acrylcopolymer, Methacrylhomopolymer oder Methacrylcopolymer mit einer Tg über 50°C und vorzugsweise über 80°C, oder Polystyrol oder ein Acryl/Styrol-Copolymer oder Methacryl/StyrolCopolymer;
• B bedeutet: ein Acrylhomopolymer, Acrylcopolymer, Methacrylhomopolymer oder Methacrylcopolymer mit einer Tg unter 20°C, das vorzugsweise Methylacrylat, Ethylacrylat, Butylacrylat, Ethylhexylacrylat, Butylmethacrylat und besonders bevorzugt Butylacrylat ist.

5. Material nach Anspruch 4, bei dem der Block A aus Methylmethacrylat, Phenylmethacrylat, Benzylmethacrylat oder Isobornylmethacrylat besteht.

6. Material nach Anspruch 4 oder 5, bei dem der Block A aus PMMA oder mit Acryl- oder Methacrylcomonomeren modifiziertem PMMA besteht.

7. Material nach einem der Ansprüche 1 bis 6, wobei die Matrix neben dem thermoplastischen Acrylblockcopolymer mindestens ein weiteres thermoplastisches Polymer enthält, das unter den PMMA, den ABS und den TPU ausgewählt ist.

8. Material nach einem der Ansprüche 4 bis 7, wobei das thermoplastische Acrylblockcopolymer unter den folgenden Dreiblockcopolymeren ausgewählt ist: pMMA-pABu-pMMA, p(MMAcoAMA)-pABu-p(MMAcoAMA) und p(MMAcoAA)-pABu-p(MMAcoAA).

9. Material nach einem der Ansprüche 1 bis 8, das ferner mindestens ein Acrylpolymer als Zusatzstoff aufweist, das aus 20 bis 80 %, vorzugsweise 50 bis 80 % MMA, 20 bis 80 %, vorzugsweise 50 bis 20 % BMA und 0 bis 15% AMA oder AA zusammengesetzt ist und eine gewichtsmittlere Molmasse zwischen 40.000 und 100.000 g/mol aufweist.

10. Material nach Anspruch 9, das ausgedrückt in Gewichtsprozent aus 5 bis 40 %, vorzugsweise 5 bis 20 % Acrylcopolymer auf 3 bis 30 %, vorzugsweise 10 bis 25 % hochvernetztes Acrylcopolymer und auf 92 bis 30 %, vorzugsweise 85 bis 55 % nanostrukturierte Matrix zusammengesetzt ist.

11. Material nach einem der Ansprüche 1 bis 10, bei dem das zumindest eine hochvernetzte Acrylcopolymer aus Polymerpartikeln besteht, die eine mittlere Größe zwischen 10 und 70 µm aufweisen und ausgedrückt in Gewichtsprozent umfassen: 99,9 - 50 % MMA, 0 - 50% auf radikalischem Weg mit dem MMA copolymerisierbare Comonomere und 0,1 - 2,5% Vernetzungsmittel.

12. Material nach Anspruch 11, das einen unter einem Winkel von 60° gemessenen Glanz unter 20 und vorzugsweise unter 10 aufweist.

13. Material nach einem der Ansprüche 11 oder 12, das einen Biegemodul von 500 bis höchstens 1800 MPa und vorzugsweise unter 1500 MPa sowie eine nach der Norm EN ISO 179-1 bei 23°C gemessene Charpy-Schlagfestigkeit bei eingekerbter Probe von mindestens 6 kJ/m² aufweist.

14. Material nach einem der Ansprüche 11 bis 13, das ein durchscheinendes und gefrostetes Aussehen hat, wenn die Partikel des hochvernetzten Acrylcopolymers eine mittlere Größe im Bereich von 40 bis 70 µm und vorzugsweise 45 bis 55 µm aufweisen, wobei sich die Brechungsindices der Partikel des Acrylcopolymers und des Blockcopolymers bei 20 °C um mehr als 0,02 Einheiten unterscheiden.

15. Material nach einem der Ansprüche 11 bis 13, das ein durchscheinendes und mattes Aussehen hat, wenn die Elementarkörner der Partikel des hochvernetzten Acrylcopolymers eine mittlere Größe im Bereich von 1 bis 40 µm, vorzugsweise 3 bis 30 µm und noch bevorzugter 10 bis 25 µm aufweisen.

16. Gegenstand, der ein Acrylmaterial nach einem der Ansprüche 1 bis 15 umfasst, wobei der Gegenstand als Folie, Teil, Profil, Platte oder Paneel vorliegt.

17. Verfahren zur Herstellung eines Gegenstands nach Anspruch 16, das einen Arbeitsgang umfasst, der ausgewählt ist unter: Spritzgießen, Extrusion, Coextrusion, Extrusionsblasformen.

18. Verwendung eines Acrylmaterials nach einem der Ansprüche 1 bis 15 als Beschichtung für ein Substrat, die einen Schritt der Coextrusion des Materials mit einem Substrat oder einen Schritt der Laminierung einer Folie, die aus dem Material besteht, auf das Substrat umfasst.

19. Verwendung nach Anspruch 18, wobei das Substrat mindestens ein thermoplastisches Polymer aufweist, das ausgewählt ist unter: schlagfestem oder nicht schlagfestem PMMA, gesättigten Polyestern wie PET, PETg oder PBT, ABS, SAN, ASA, kristallinem oder schlagfestem PS, POs wie Polypropylen oder Polyethylen, Polycarbonat, PPO, TPOs, Polysulfonen, Polymerisaten auf Basis von Vinylchlorid, wie PVC, CPVC und expandiertem PVC, PU, TPUs, Polyacetalen.

20. Verwendung nach einem der Ansprüche 18 oder 19, wobei eine Zwischenschicht zwischen dem Acrylmaterial und dem Substrat angeordnet ist, insbesondere im Falle der Substrate aus schlagfestem PS, TPO und PO.

21. Mehrschichtstruktur, die eine erste Schicht aufweist, die aus einem Material nach einem der Ansprüche 1 bis 15 besteht, sowie eine zweite Schicht, die zumindest ein Substrat aus einem thermoplastischen Polymer umfasst.

22. Mehrschichtstruktur nach Anspruch 21, worin das erfindungsgemäße Material 1 bis 20 % und vorzugsweise 2 bis 15 % der Gesamtdicke ausmacht.

23. Mehrschichtstruktur nach Anspruch 21 oder 22, worin das Substrat mindestens ein thermoplastisches Polymer aufweist, das ausgewählt ist unter: schlagfestem oder nicht schlagfestem PMMA, gesättigten Polyestern wie PET, PETg oder PBT, ABS, SAN, ASA, kristallinem oder schlagfestem PS, Polypropylen, Polyethylen, Polycarbonat, PPO, TPOs, Polysulfonen, Polymerisaten auf Basis von Vinylchlorid, wie PVC, CPVC und expandiertem PVC, PU, TPUs, Polyacetalen.

## Claims

1. An acrylic material comprising:
• a matrix composed of at least one thermoplastic acrylic block copolymer,
• and at least one highly crosslinked acrylic copolymer.

2. The material as claimed in claim 1, additionally comprising an inorganic filler chosen from silica, talc, kaolin, calcium carbonate, carbon black, titanium oxides and pigments.

3. The material as claimed in either of claims 1 and 2, comprising, by weight, from 60% to 99%, advantageously from 70% to 97% and preferably from 75% to 90% of matrix for from 40% to 1%, advantageously from 30% to 3% and preferably from 25% to 10% of highly crosslinked copolymer.

4. The material as claimed in any one of claims 1 to 3, in which the matrix is composed of at least one thermoplastic acrylic block copolymer having a general formula (A)ₙB in which:
• n is an integer of greater than or equal to 1,
• A is: an acrylic or methacrylic homo- or copolymer having a Tg of greater than 50°C, preferably of greater than 80°C, or polystyrene, or an acrylic/styrene or methacrylic/styrene copolymer,
• B is an acrylic or methacrylic homo- or copolymer having a Tg of less than 20°C, preferably consisting of methyl acrylate, ethyl acrylate, butyl acrylate, ethylhexyl acrylate or butyl methacrylate, more preferably butyl acrylate.

5. The material as claimed in claim 4, in which the block A is methyl methacrylate, phenyl methacrylate, benzyl methacrylate or isobornyl methacrylate.

6. The material as claimed in either of 4 and 5, in which the block A is PMMA or PMMA modified with acrylic or methacrylic comonomers.

7. The material as claimed in one of claims 1 to 6, in which said matrix comprises, in addition to the thermoplastic acrylic block copolymer, at least one other thermoplastic polymer chosen from PMMAs, ABSs and TPUs.

8. The material as claimed in one of claims 4 to 7, in which the thermoplastic acrylic block copolymer is chosen from the following triblock copolymers: pMMA-pBuA-pMMA, p(MMAcoMAA)-pBuA-p(MMAcoMAA) and p(MMAcoAA)-pBuA-p(MMAcoAA).

9. The material as claimed in any one of claims 1 to 8, additionally comprising at least one acrylic polymer additive consisting of from 20% to 80%, preferably from 50% to 80%, of MMA, from 20% to 80%, preferably from 50% to 20%, of BMA and from 0% to 15% of MAA or AA, and having a weight-average molecular weight of between 40 000 and 100 000 g/mol.

10. The material as claimed in claim 9, consisting, by weight, of 5% to 40%, preferably of 5% to 20%, of acrylic copolymer, for from 3% to 30%, preferably from 10% to 25%, of highly crosslinked acrylic copolymer and for from 92% to 30%, preferably from 85% to 55%, of nanostructured matrix.

11. The material as claimed in any one of claims 1 to 10, in which said at least one highly crosslinked acrylic copolymer consists of particles of polymers having a mean size of between 10 and 70 microns and comprising by weight: 99.9%-50% of MMA, 0%-50% of comonomer which can copolymerize by the radical route with the MMA and 0.1%-2.5% of crosslinking agent.

12. The material as claimed in claim 11, exhibiting a gloss of less than 20, preferably of less than 10, measured under an angle of 60°.

13. The material as claimed in either of claims 11 and 12, exhibiting a flexural modulus ranging from 500 MPa to less than 1800 MPa, preferably of less than 1500 MPa, and a notched Charpy impact strength of at least 6 kJ/m², as measured according to the standard EN ISO 179-1 at 23°C.

14. The material as claimed in one of claims 11 to 13, exhibiting a translucent and frosted appearance when the particles of highly crosslinked acrylic copolymer have mean sizes ranging from 40 to 70 microns, preferably from 45 to 55 microns, and the refractive indices of the particles of the acrylic copolymer and of the block copolymer differ at 20°C by more than 0.02 units.

15. The material as claimed in one of claims 11 to 13, exhibiting a translucent and matt appearance when the elementary grains of the particles of highly crosslinked acrylic copolymer have sizes ranging from 1 to 40 µm, preferably from 3 to 30 µm and more preferably from 10 to 25 µm.

16. An article comprising an acrylic material as claimed in one of claims 1 to 15, said article being in the form of a film, part, profiled element, sheet or panel.

17. A process for the manufacture of an article as claimed in claim 16, comprising an operation chosen from: injection molding, extrusion, coextrusion or extrusion/blow molding.

18. The use of an acrylic material as claimed in one of claims 1 to 15 as substrate coating, comprising a stage of coextrusion of said material with a substrate or a stage of lamination of a film consisting of said material over a substrate.

19. The use as claimed in claim 18, in which said substrate comprises at least one thermoplastic polymer chosen from: PMMA, which is or is not high-impact, saturated polyesters, such as PET, PETg or PBT, ABS, SAN, ASA, crystal or high-impact PS, POs, such as polypropylene or polyethylene, polycarbonate, PPO, TPOs, polysulfones, polymers based on vinyl chloride, such as PVC, CPVC or expanded PVC, PU, TPUs or polyacetals.

20. The use as claimed in either of claims 18 and 19, in which an intermediate layer is positioned between the acrylic material and said substrate, in particular in the case of the substrates made of high-impact PS, TPO and PO.

21. A multilayer structure comprising a first layer consisting of the material as claimed in one of claims 1 to 15 and a second layer comprising at least one substrate made of a thermoplastic polymer material.

22. The multilayer structure as claimed in claim 21, in which the material according to the invention represents from 1% to 20%, preferably from 2% to 15%, of the total thickness.

23. The multilayer structure as claimed in claim 21 or 22, in which said substrate comprises at least one thermoplastic polymer chosen from: PMMA, which is or is not high-impact, saturated polyesters, such as PET, PETg or PBT, ABS, SAN, ASA, crystal or high-impact PS, polypropylene, polyethylene, polycarbonate, PPO, TPOs, polysulfones, polymers based on vinyl chloride, such as PVC, CPVC or expanded PVC, PU, TPUs or polyacetals.
